Europäisches Patentamt

European Patent Office

Office européen des brevets

(19)

(11) Numéro de publication : **0 041 442**
**B1**

(12)                      **FASCICULE DE BREVET EUROPÉEN**

(45) Date de publication du fascicule du brevet :
**21.03.84**

(51) Int. Cl.³ : **A 01 D 85/00, A 01 F 15/14**

(21) Numéro de dépôt : **81400840.5**

(22) Date de dépôt : **26.05.81**

(54) **Dispositif de liage pour presses à balles cylindriques.**

(30) Priorité : **29.05.80 FR 8011920**

(43) Date de publication de la demande :
**09.12.81 Bulletin 81/49**

(45) Mention de la délivrance du brevet :
**21.03.84 Bulletin 84/12**

(84) Etats contractants désignés :
**DE FR GB IT**

(56) Documents cités :
**DE-A- 2 800 800**

(73) Titulaire : **JOHN DEERE (Société Anonyme)**
**8, Quai de la Madeleine**
**F-45000 Orléans (FR)**

(72) Inventeur : **Viaud, Jean**
**Chargey-les-Gray**
**F-70100 Gray (FR)**
Inventeur : **Berthet, Jean-Paul**
**11, Faubourg Roch**
**F-70100 Arc-les-Gray (FR)**

(74) Mandataire : **Pruvost, Marc Henri et al**
**Cabinet PRUVOST 31 Bld. Gutenberg**
**F-93190 Livry-Gargan (FR)**

EP 0 041 442 B1

Jouve, 18, rue St-Denis, 75001 Paris, France

Dispositif de liage pour presses à balles cylindriques

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un organe de guidage de la ficelle déplacé transversalement au sens de la marche de la presse devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe de guidage, cette ficelle forme autour de la balle, lorsqu'elle est appelée par la rotation de cette dernière, des spires hélicoïdales assurant un liage sur toute la longueur de cette balle.

Il est connu de réaliser l'organe de guidage de la ficelle sous la forme d'un bras, notamment d'un bras tubulaire, monté à pivotement sur la presse, de manière à effectuer, sous l'action de moyens appropriés, un mouvement de balayage transversal en face de l'orifice d'entrée des produits de récolte dans la chambre de formation de la balle.

On a également déjà proposé de réaliser l'organe de guidage de la ficelle sous la forme d'un organe se déplaçant sur un guide rectiligne disposé devant cet orifice d'entrée des produits de récolte dans la chambre de formation de la balle. Des moyens sont alors prévus pour provoquer de façon positive le déplacement de cet organe le long de ce guide rectiligne. Suivant une construction connue (demande de brevet allemant 26 45 762) un moteur électrique assure l'entraînement en rotation d'une vis logée dans ce guide et avec laquelle vient en prise un élément prévu sur un organe de guidage analogue à un chariot capable de se déplacer sur le guide rectiligne. Des contacteurs électriques sont alors prévus pour l'obtention des déplacements appropriés.

On comprendra toutefois que de tels moyens, utilisant un moteur électrique et des contacteurs, sont peu compatibles avec les conditions de travail d'une presse à balles et que des produits de récolte peuvent, par exemple, gêner le fonctionnement des contacteurs électriques et perturber ainsi l'opération de liage.

Le but de l'invention est de remédier aux inconvénients des agencements existants et de créer un dispositif à guide rectiligne dans lequel le prélèvement de la ficelle par la balle provoque automatiquement le déplacement de l'organe de guidage de la ficelle le long de la vis servant de guide rectiligne.

L'invention est matérialisée en conséquence dans un dispositif de liage pour presses à balles cylindriques comprenant un organe de guidage de la ficelle déplaçable transversalement au sens de marche de la presse sur un guide rectiligne placé devant l'orifice d'entrée des produits de récolte dans la chambre de formation de la balle, dans lequel ce guide rectiligne est constitué par une vis et l'organe de guidage de la ficelle coopère avec cette vis pour son déplacement sur celle-ci, caractérisé en ce que cet organe de guidage de la ficelle est formé par une poulie sur laquelle passe la ficelle servant au liage de la balle durant son trajet entre la boîte à ficelle et la chambre contenant la balle, cette poulie comprenant un moyeu en prise avec cette vis, de telle sorte que la traction exercée sur la ficelle par la balle lors de la rotation de cette dernière dans ladite chambre provoque la rotation de cette poulie et ainsi son déplacement sur la vis formant le guide rectiligne transversal par le maintien en prise de son moyen avec la vis.

Il en résulte un agencement extrêmement simple du dispositif, supprimant toute possibilité de dérangement puisque le déplacement de l'organe de guidage de la ficelle le long de la vis est assuré par l'appel même de la ficelle par la balle en rotation.

Afin de provoquer avec certitude la rotation de la poulie formant l'organe de guidage de la ficelle, celle-ci forme de préférence au moins une spire autour de cette poulie.

Etant donné que la poulie de guidage de la ficelle doit pouvoir être déplacée en va-et-vient entre les deux côtés de la presse, la vis formant le guide rectiligne est de préférence à double filet, c'est-à-dire réversible.

Suivant un mode de réalisation possible, la vis formant le guide rectiligne transversal est fixe et la poulie constituant l'organe de guidage de la ficelle comprend une couronne extérieure et un moyeu intérieur en prise avec cette vis, ainsi qu'un engrenage épicycloïdal interposé entre cette couronne extérieure et ce moyeu intérieur. On peut ainsi obtenir, entre ladite couronne et ledit moyeu intérieur, une réduction de vitesse de rotation appropriée, ce qui permet d'utiliser une vis à pas relativement allongé tout en fournissant un déplacement suffisamment lent de l'organe de guidage de la ficelle dans le sens transversal en face de l'orifice d'entrée des produits de récolte dans la presse. On conçoit en effet que, compte tenu du diamètre important des balles cylindriques formées dans de telles presses, la vitesse d'appel de la ficelle est elle-même élevée. Il est donc nécessaire, dans un tel cas, de prévoir des moyens tenant compte de la vitesse de rotation élevée résultante de la poulie formant l'organe de guidage de la ficelle et fournissant un mouvement suffisamment lent de cette poulie dans sa translation devant l'orifice d'entrée de la presse. L'agencement mentionné évite en particulier de devoir utiliser une vis à filets serrés, qui serait bien entendu d'un prix élevé, compte tenu en particulier du fait qu'elle doit être réversible.

Avec cet agencement, on obtient une course de liage de la poulie formant l'organe de guidage de la ficelle pour les deux sens de déplacement de cette poulie sur la vis formant le guide rectiligne, et on prévoit judicieusement un couteau destiné à sectionner la ficelle de chaque côté de la presse.

Suivant un autre mode de réalisation possible, la vis formant le guide rectiligne est tourillonnée dans des paliers prévus sur la presse et porte vers une extrémité une poulie calée sur elle, et la ficelle de liage provenant de la boîte à ficelle s'enroule dans le même sens sur cette poulie calée sur la vis, ainsi que sur une seconde poulie formant organe de guidage de la ficelle, avant de parvenir à la balle pour son liage, la poulie calée sur la vis ayant un diamètre d'enroulement de la ficelle différent de celui de l'autre poulie. Ainsi, la poulie formant organe de guidage subit un déplacement lent sur la vis à une vitesse qui dépend de la différence de diamètre des poulies, par un effet différentiel.

L'invention concerne encore les presses à balles cylindriques équipées d'un dispositif de liage tel que décrit ci-avant.

La description qui va suivre, faite en regard des dessins annexés, donnés à titre non limitatif, permettra de mieux comprendre l'invention.

La figure 1 est une vue en perspective d'une presse à balles cylindriques équipée du dispositif suivant l'invention.

La figure 2 est une vue partielle à plus grande échelle montrant un mode de réalisation du dispositif de liage.

La figure 3 est une vue à plus grande échelle de détail avec arrachement partiel, montrant l'agencement intérieur de la poulie de guidage de la ficelle suivant ce mode de réalisation.

La figure 4 est une vue analogue à la fig. 2 mais correspondant à une variante de réalisation.

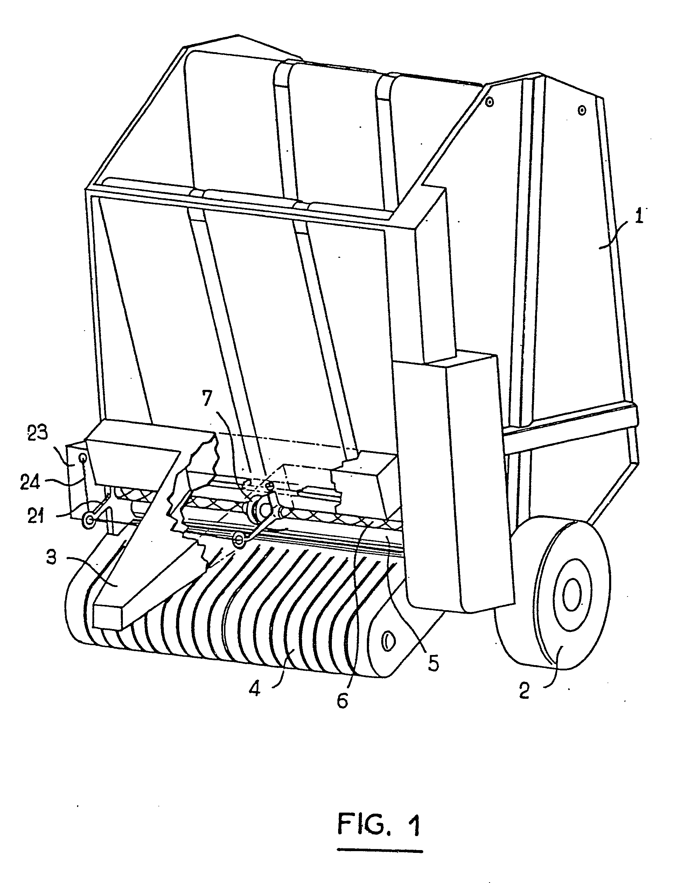

On a représenté sur la fig. 1 une presse à balles cylindriques de type classique, comportant un corps 1 supporté par un châssis équipé de roues 2, la presse étant destinée à être attelée à un tracteur au moyen d'un timon 3. Un ramasseur 4 est prévu de façon classique à la partie avant du corps 1 de la presse, de manière à ramasser les produits de récolte, tels que du fourrage, sur le champ et à les amener à l'orifice d'entrée des produits dans la presse, ménagé entre des rouleaux dont l'on est visible en 5 sur la fig. 1. Ces produits subissant à l'intérieur de la chambre de la presse un enroulement sous l'effet de bandes ou courroies, pour former une balle cylindrique, d'une manière en soi bien connue.

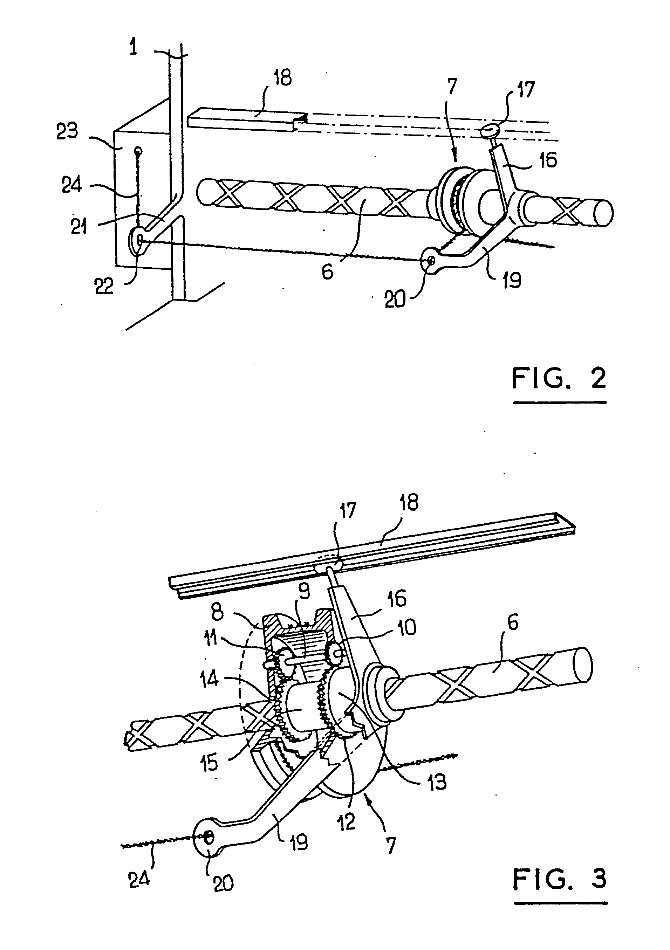

Suivant l'invention, une vis à double filet ou vis réversible 6 est prévue transversalement à la presse un peu en avant de l'orifice d'entrée des produits de récolte et parallèlement à cet orifice. Dans le cas du mode de réalisation visible sur les fig. 1 à 3, cette vis 6 est fixe. Une poulie de guidage de la ficelle, désignée dans son ensemble par la référence 7, est montée sur la vis réversible 6. Comme cela est plus visible sur la fig. 3, cette poulie 7 comprend une couronne extérieure à gorge 8 ménageant une cavité intérieure et dans les joues de laquelle est tourillonné au moins un axe 9 portant deux pignons ou satellites 10, 11. Le pignon 10 engrène avec une denture 12 formant un premier planétaire, portée par un moyeu extérieur fixe 13, tandis que le pignon 11 engrène avec une seconde denture 14 ayant un diamètre différent de celui de la denture 12 et portée par un moyeu intérieur rotatif 15. L'intérieur du moyeu rotatif 15 présente des doigts ou profilages analogues en prise avec les filets de la vis fixe 6. On voit ainsi que la poulie 7 comporte intérieurement un engrenage épicycloïdal dont la fonction sera indiquée plus loin.

Le moyeu extérieur fixe 13 porte un premier bras 16 dirigé vers le haut, muni à son extrémité d'un galet 17 engagé dans une gouttière de guidage 18 formée par exemple par un profilé en U fixé sur la presse transversalement à celle-ci et parallèlement à la vis 6. Ainsi lors du mouvement transversal de la poulie 7 sur la vis 6, le moyeu extérieur 13 est empêché de tourner par engagement du galet 17 porté par le bras 16 dans cette gouttière de guidage et de retenue 18.

Ce moyeu extérieur 13 porte également un second bras 19 qui, dans le mode réalisation visible sur les fig. 1 à 3, est dirigé vers l'avant, et qui se termine par un œilleton 20.

Un bras 21 porté par une paroi latérale de la presse présente également à son extrémité libre un œilleton 22. La boîte à ficelle indiquée en 23 est disposée au voisinage de ce bras 21. Comme visible sur les dessins la ficelle 24 sortant de la boîte à ficelle 23 traverse l'œilleton 22 du bras 21, puis l'œilleton 20 du bras 19 et vient s'enrouler sur la poulie 7, son extrémité étant dirigée vers l'orifice d'entrée des produits de récolte dans la presse.

Le mode de fonctionnement de ce mode de réalisation de l'invention est le suivant :

D'une manière en soi connue, l'extrémité libre de la ficelle est, au début de l'opération, retenue par un couteau ayant servi à sectionner la ficelle à la fin de l'opération de liage de la balle précédente. Il est prévu dans le cas considéré un couteau de chaque côté de la presse, au voisinage de chaque extrémité de la vis 6. Egalement au début de l'opération, la poulie 7 se trouve à l'extrémité de la vis 6 voisine du couteau retenant l'extrémité de la ficelle.

Lorsque la formation de la balle est en principe terminée, des moyens (non représentés) provoquent de façon connue l'ouverture du couteau retenant la ficelle, de sorte que l'extrémité de celle-ci pend librement et peut être reprise par les produits de récolte et par la balle, qui entraîne ainsi cette ficelle par son mouvement de rotation, en exerçant sur elle une traction.

La traction exercée par l'effet d'appel de la ficelle provoque, étant donné que cette ficelle entoure la couronne extérieure 8 de la poulie 7, la rotation de cette couronne extérieure 8. Cette rotation entraîne les satellites 9-11, le pignon 10 roulant alors sur la denture fixe 12. Il en résulte un entraînement en rotation du pignon 11 et ainsi de la denture 14 et du moyeu intérieur 15, avec une faible vitesse angulaire, qui est fonction de la différence entre les diamètres des dentures 12 et 14. Par engrènement avec les filets de la vis 6, le moyeu rotatif 15 provoque un déplacement en translation à faible vitesse de la poulie 7 le long de cette vis, le moyeu extérieur 13 étant empêché de tourner par le bras 16 et la gouttière 18 dans laquelle le galet 17 se déplace par roulement pendant le mouvement de translation précité.

Ainsi, la ficelle appelée par la balle provoque, par l'intermédiaire du train épicycloïdal de la poulie 7, le lent mouvement de balayage transversal requis le long de la vis 6, en face de l'orifice d'entrée des produits de récolte, de sorte que le liage de la balle s'effectue en hélice de la manière désirée. La ficelle est prélevée au fur et à mesure de cette opération à la boîte à ficelle 23 à travers les œilletons 20 et 22.

Quand la poulie 7 a atteint l'extrémité de la vis 6 opposée à sa position de départ, un dispositif mécanique de butée en soi classique peut actionner le couteau conjugué pour sectionner la ficelle et retenir son extrémité libre. Toute traction sur la ficelle cesse alors et la poulie 7 s'arrête dans sa nouvelle position de départ, tandis que la balle liée peut être déchargée de la presse.

Lors de l'opération de liage suivante, la poulie 7 va bien entendu se déplacer en sens opposé sur la vis 6, étant donné que celle-ci est à double filet, avec une vitesse de balayage transversale réduite comme précédemment.

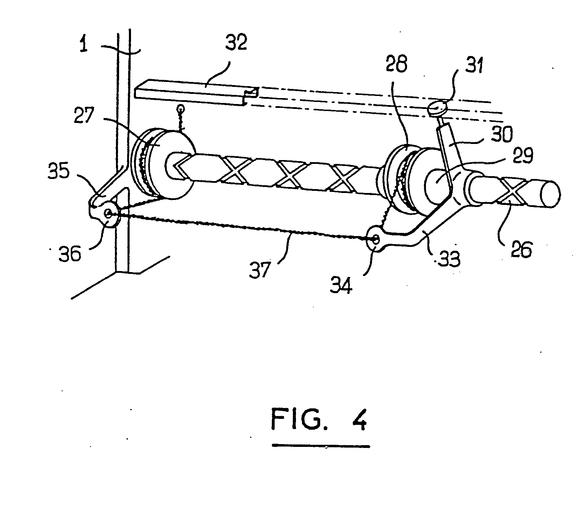

Une variante de réalisation de l'invention est représentée sur la fig. 4.

Dans ce cas, la vis 26 qui est également à double filet est tourillonnée dans des paliers appropriés (non représentés) prévus par la presse. Cette vis porte à une extrémité une poulie 27 calée sur elle. Elle porte également une seconde poulie 28 qui est de type monobloc et dont le moyeu 29 présente intérieurement des doigts ou profilages en prise avec les filets de la vis 26. Ce moyeu 29 porte un premier bras 30 terminé par un galet 31 qui ici est engagé dans une gouttière de guidage 32 fixée sur la presse parallèlement à la vis 26. Il porte également un second bras 33 dirigé vers l'avant et terminé par un œilleton 34. Ces bras 30, 33 permettent la libre rotation du moyeu 29 de la poulie 28. Un bras 35 terminé par un œilleton 36 est fixé sur une paroi latérale de la presse au voisinage de la boîte à ficelle (non représentée). Le diamètre de la seconde poulie 28 est différent de celui de la première poulie 27.

La ficelle 37 provenant de la boîte à ficelle passe d'abord autour de la poulie 27, en formant par exemple une spire, puis traverse les œilletons 36 et 34 et forme au moins une spire autour de la poulie 28, par enroulement dans le même sens que sur la poulie 27, son extrémité libre étant dirigée vers l'orifice d'entrée des produits de récolte dans la presse.

Avec ce mode de réalisation de l'invention, une position de repos de la poulie 28 formant l'organe de guidage de la ficelle est ici encore ménagée aux deux extrémités de la vis 26, et un couteau (non représenté) de sectionnement et de retenue de la ficelle est prévu à chacune de ces extrémités.

Le fonctionnement du dispositif est, selon ce mode de réalisation, le suivant :

Vers la fin de l'opération de formation de la balle dans la presse, le couteau retenant l'extrémité libre de la ficelle est ouvert par des organes en soi connus (non représentés) et cette ficelle est ainsi libérée. Son extrémité est alors saisie par les produits de récolte et par la balle et une traction est exercée. Sous l'effet de cette traction, la ficelle ainsi appelée fait tourner dans le même sens, d'une part la poulie 28 et d'autre part la poulie 27 et avec elle la vis 26. Cette poulie 28 subit alors sur la vis un déplacement transversal à une vitesse qui est fonction de la différence de diamètre entre les poulies.

Ainsi, on peut obtenir le mouvement de balayage transversal requis à faible vitesse pour assurer un liage correct de la balle.

Quand la poulie 28 parvient à l'extrémité opposée de la vis elle actionne, par un dispositif de butée mécanique en soi connu, le couteau conjugué, qui sectionne la ficelle et retient son extrémité libre. Aucune traction ne s'exerçant plus, la vis s'arrête et la poulie 28 demeure dans cette nouvelle position de repos jusqu'à l'opération de liage suivante.

Des modifications peuvent être apportées aux modes de réalisation décrits : ainsi, on peut, en prévoyant une vis ayant des filets de pas différents, obtenir des déplacements de la poulie de guidage de la ficelle sur cette vis à des vitesses différentes dans les deux sens.

**Revendications**

1. Dispositif de liage pour presses à balles cylindriques comprenant un organe de guidage de la ficelle déplaçable transversalement au sens de marche de la presse sur un guide rectiligne placé devant l'orifice d'entrée des produits de récolte dans la chambre de formation de la balle, dans lequel ce guide rectiligne est constitué sur une vis (6, 26) et l'organe de guidage de la ficelle coopère avec cette vis pour son déplacement sur celle-ci, caractérisé en ce que cet organe de guidage de la ficelle est formé par une poulie (7, 28) sur laquelle passe la ficelle (24, 37) servant au liage de la balle durant son trajet entre la boîte à ficelle (23) et la chambre contenant la balle, cette poulie (7, 28) comprenant un moyeu (15, 29) en prise avec cette vis (6, 26), de telle sorte que la traction exercée sur la ficelle par la balle lors de la rotation de cette dernière dans ladite chambre provoque la rotation de cette poulie (7, 28) et ainsi son déplacement sur la vis (6, 26) formant le guide rectiligne transversal par le maintien en prise de son moyeu (15, 29) avec la vis (6, 26).

2. Dispositif de liage suivant la revendication 1, caractérisé en ce que la vis (6, 26) formant le guide rectiligne est à une vis à double filet ou réversible.

3. Dispositif de liage suivant la revendication 1 ou 2, caractérisé en ce que la vis (6) formant le guide rectiligne est fixe.

4. Dispositif de liage suivant la revendication 3, caractérisé en ce que la poulie (7) formant l'organe de guidage de la ficelle (24) comprend une couronne extérieure (8) et un moyeu intérieur (15) en prise avec cette vis (6), ainsi qu'en engrenage épicycloïdal interposé entre cette couronne extérieure et ce moyeu intérieur.

5. Dispositif de liage suivant la revendication 4, caractérisé en ce que la couronne extérieure (8) ménage une cavité dans laquelle est logé l'engrenage épicycloïdal, qui comprend au moins un jeu de pignons (10, 11) dont l'un (11) engrène avec une denture (14) portée par le moyeu intérieur susceptible de tourner (15) en prise avec la vis (6), tandis que l'autre (10) engrène avec une denture (12) portée par un moyeu extérieur fixe (13) de la poulie, ces deux dentures ayant des diamètres différents afin de fournir, par un effet différentiel, un mouvement transversal lent de la poulie (7) en face de l'orifice d'entrée des produits de récolte dans la presse malgré un mouvement d'appel linéaire rapide de la ficelle, des moyens d'immobilisation angulaire (16, 17, 18) étant conjugués au moyeu extérieur fixe (13).

6. Dispositif de liage suivant la revendication 5, caractérisé en ce que ces moyens d'immobilisation sont constitués par un bras (16) ou analogue porté par le moyeu extérieur fixe (13), et dont l'extrémité est engagée, de préférence avec interposition d'un galet de roulement (17), dans un profilé de guidage fixe (18) orienté parallèlement à la vis (6).

7. Dispositif de liage suivant la revendication 2, caractérisé en ce que la vis (26) formant le guide rectiligne est tourillonnée dans des paliers prévus sur la presse et porte vers une extrémité une poulie (27) calée sur elle, la ficelle (37) provenant de la boîte à ficelle passant d'abord sur cette poulie (27), puis sur une seconde poulie (28) formant l'organe de guidage de la ficelle, déplaçable sur la longueur de la vis (26) et présentant un moyeu (29) en prise avec le filet de cette vis (26), le passage de la ficelle sur ces poulies étant tel qu'elles tournent dans le même sens et les diamètres des poulies (27, 28) étant différents.

8. Dispositif de liage suivant la revendication 7, caractérisé en ce que la poulie (28) déplaçable sur la longueur de la vis comprend un élément (33, 34) de guidage de la ficelle monté à rotation sur cette poulie et maintenu dans une position angulaire fixe.

9. Dispositif de liage suivant la revendication 8, caractérisé en ce que pour cela le moyeu (29) de la poulie (28) porte un bras (33) muni d'un œilleton (34) pour le passage de la ficelle et un autre bras (30) engagé par son extrémité, de préférence par l'intermédiaire d'un galet (31), dans un guide (32) fixé sur la presse et s'étendant parallèlement à la vis (26), ces deux bras étant reliés rigidement l'un à l'autre et permettant la libre rotation du moyeu de la poulie.

10. Presses à balles cylindriques, caractérisées en ce qu'elle comportent un dispositif de liage suivant l'une quelconque des revendications précédentes.

**Claims**

1. A binding apparatus for cylindrical bale presses comprising a member for guiding the yarn, which is displaceable transversely with respect to the direction of movement of the press, on a rectilinear guide disposed in front of the opening for the intake of crop materials into the bale forming chamber, in which said rectilinear guide is formed on a screw (6, 26) and the yarn guide member co-operates with said screw for its displacement thereon, characterised in that said yarn guide member is formed by a pulley (7, 28) over which passes the yarn (24, 37) serving for binding the bale during its movement between the yarn box (23) and the chamber containing the bale, said pulley (7, 28) comprising a hub (15, 29) which is engaged with said screw (6, 26) in such a way that the pulling force applied to the yarn by the bale during rotation of the latter in said chamber causes rotation of said pulley (7, 28) and thus displacement thereof on the screw (6, 26) forming the transverse rectilinear guide by virtue of its hub (15, 29) being held in engagement with the screw (6, 26).

2. A binding apparatus according to claim 1 characterised in that the screw (6, 26) forming the rectilinear guide is a double-thread or reversible screw.

3. A binding apparatus according to claim 1 or claim 2 characterised in that the screw (6) forming the rectilinear guide is fixed.

4. A binding apparatus according to claim 3 characterised in that the pulley (7) forming the member for guiding the yarn (24) comprises an outer rim portion (8) and an inner hub (15) engaged with said screw (6), and an epicyclic gear train interposed between said outer rim portion and said inner hub.

5. A binding apparatus according to claim 4 characterised in that the outer rim portion (8) provides a cavity in which the epicyclic gear train is housed, said epicyclic gear train comprising at least one set of pinions (10, 11) of which one (11) meshes with a tooth assembly (14) carried by the inner hub (15) which is capable of rotating, and being engaged with the screw (6), while the other pinion (10) meshes with a tooth assembly (12) carried by a fixed outer hub (13) of the pulley, said two tooth assemblies being of different diameters thereby, by a differential effect, to produce a slow transverse movement of the pulley (7) opposite the opening for the intake of crop materials into the press in spite of a rapid linear pull movement of the yarn, angular immobilisation means (16, 17, 18) being combined with the fixed outer hub (13).

6. A binding apparatus according to claim 5 characterised in that said immobilisation means comprise an arm (16) or the like which is carried by the fixed outer hub (13) and the end of which is engaged, preferably by way of an interposed roller (17), in a fixed guide shaped member (18) which is oriented parallel to the screw (6).

7. A binding apparatus according to claim 2 characterised in that the screw (26) forming the rectilinear guide is journalled in bearings provided on the press and towards one end carries a pulley (27) fixed thereon, the yarn (37) from the yarn box first passing around said pulley (27) and then around a second pulley (28) forming the yarn guide member, being displaceable over the length of the screw (26) and having a hub (29) engaged with the thread of said screw (26), the movement of the yarn around said pulleys being such that they rotate in the same direction, the diameters of the pulleys (27, 28) being different.

8. A binding apparatus according to claim 7 characterised in that the pulley (28) which is displaceable along the length of the screw comprises a yarn guide element (33, 34) which is mounted rotatably on said pulley and which is held in a fixed angular position.

9. A binding apparatus according to claim 8 characterised in that, for that purpose, the hub (29) of the pulley (28) carries an arm (33) provided with an eye (34) for the yarn to pass therethrough and another arm (30) which is engaged by means of its end, and preferably by way of a roller (31), in a guide (32) which is fixed to the press and which extends parallel to the screw (26), said two arms being rigidly connected together and permitting free rotary movement of the hub of the pulley.

10. Cylindrical bale presses characterised in that they comprise a binding apparatus according to any one of the preceding claims.

**Ansprüche**

1. Bindevorrichtung für Rundballenpressen, welche ein Garnführungsorgan aufweist, das quer zur Fahrtrichtung der Presse auf einer geradlinigen Führung verstellbar ist, die vor der Eintrittsöffnung der Ernteprodukte in die Ballenformkammer angeordnet ist, bei der diese geradlinige Führung durch eine Schraubspindel (6, 26) gebildet ist und das Garnführungsorgan mit dieser Schraubspindel zu seiner Verstellung auf dieser zusammenwirkt, dadurch gekennzeichnet, dass dieses Garnführungsorgan durch eine Rolle (7, 28) gebildet ist, über die das Garn (24, 37), das zum Binden des Ballens dient, während seines Weges zwischen dem Garnkasten (23) und der den Ballen enthaltenden Kammer läuft, und dass diese Rolle (7, 28) eine Nabe (15, 29) in Eingriff mit dieser Schraubspindel (6, 26) aufweist, derart, dass der vom Ballen bei der Drehung des letzteren in der besagten Kammer auf das Garn ausgeübte Zug die Rotation der Rolle (7, 28) und so ihre Verstellung auf der Schraubspindel (6, 26), welche die gerade Querführung bildet, durch die Aufrechterhaltung des Eingriffes ihrer Nabe (15, 29) mit der Schaubspindel (6, 26) hervorruft.

2. Bindevorrichtung nach Anspruch 1, dadurch gekennzeichnet, dass die Schraubspindel (6, 26), welche die geradlinige Führung bildet, eine Schraubspindel mit doppeltem Schraubengang oder eine Umkehrschraubspindel ist.

3. Bindevorrichtung nach Anspruch 1 oder 2, dadurch gekennzeichnet, dass die Schraubspindel (6), welche die geradlinige Führung bildet, fixiert ist.

4. Bindevorrichtung nach Anspruch 3, dadurch gekennzeichnet, dass die Rolle (7), welche das Garnführungsorgan (24) bildet, einen äusseren Kranz (8) und eine innere Nabe (15) umfasst, welche mit der Schraubspindel (6) in Eingriff steht, und dass ein epizykloides Getriebe zwischen dem äusseren Kranz und der inneren Nabe angeordnet ist.

5. Bindevorrichtung nach Anspruch 4, dadurch gekennzeichnet, dass der äussere Kranz (8) eine Ausnehmung bildet, in der das epizykloide Getriebe angeordnet ist, welches wenigstens einen Satz Zahnräder (10, 11) umfasst, von denen das eine (11) mit einer Verzahnung (14) in Eingriff steht, welche von der inneren Nabe (15) getragen wird, die bei Eingriff mit der Schraubspindel (6) drehen kann, während das andere (10) mit einer Verzahnung (12) kämmt, die durch eine äussere festgesetzte Nabe (13) der Rolle getragen wird, das die beiden Verzahnungen unterschiedliche Durchmesser aufweisen, um durch einen Differentialeffekt eine langsame Querbewegung der Rolle (7) vor der Eintriffsöffnung der Ernteprodukte in die Presse zu liefern, trotz einer raschen linearen Zugbewegung des Garnes, und dass Mittel (16, 17, 18) zur winkelförmigen Festlegung der äusseren festgesetzten Nabe (13) zugeordnet sind.

6. Bindevorrichtung nach Anspruch 5, dadurch gekennzeichnet, dass die Mittel zur Festlegung durch einen Arm (16) oder dergleichen gebildet sind, der von der äusseren festgesetzten Nabe (13) getragen wird und dessen Ende, vorzugsweise unter Zwischenschaltung einer Transportrolle (17), mit einem festen Führungsprofil (18) in Eingriff steht, das parallel zur Schraubspindel (6) orientiert ist.

7. Bindevorrichtung nach Anspruch 2, dadurch gekennzeichnet, dass die Schraubspindel (26), welche die geradlinige Führung bildet, in Lagern drehbar ist, die an der Presse vorgesehen sind, und dem einen Ende zu eine Rolle (27) trägt, die auf ihr festgelegt ist, und dass das Garn (37), das aus dem Garnkasten kommt, zuerst über diese Rolle (27) und danach über eine zweite Rolle (28) läuft, welche das Garnführungsorgan bildet, und auf der Länge der Schraubspindel (26) verstellbar ist eine Nabe (29) darbietet, welche mit dem Gewinde der Schraubspindel (26) in Eingriff steht, wobei der Durchgang des Garnes über diese Rollen derart ist, dass diese im gleichen Sinne rotieren, während der Durchmesser der Rollen (27, 28) unterschiedlich ist.

8. Bindevorrichtung nach Anspruch 7, dadurch gekennzeichnet, dass die Rolle (28), die auf der Länge der Schraubspindel verstellbar ist, ein Element (33, 34) zur Führung des Garnes umfasst, welches drehbar auf der Rolle montiert ist und in einer festen Winkelstellung gehalten ist.

9. Bindevorrichtung nach Anspruch 8, dadurch gekennzeichnet, dass hierzu die Nabe (29) der Rolle (28) einen Arm (33), der eine Öse (34) für den Durchgang des Garnes umfasst, sowie einen anderen Arm (30) trägt der mit seinem Ende, vorzugsweise unter Zwischenschaltung einer Rolle (31), in eine Führung (32) eingreift, die auf der Presse fest angeordnet ist und sich parallel zu der Schraubspindel (26) erstreckt, und dass die beiden Arme starr miteinander verbunden sind und eine freie Drehung der Nabe der Rolle zulassen.

10. Rundballenpresse, dadurch gekennzeichnet, dass sie eine Bindevorrichtung nach irgendeinem der voranstehenden Ansprüche umfasst.

FIG. 1

FIG. 2

FIG. 3

FIG. 4